# EUROPEAN PATENT SPECIFICATION

(11) **EP 3 146 137 B1**
(45) Date of publication and mention of the grant of the patent: **11.09.2019**
(21) Application number: 15729979.3
(22) Date of filing: 22.05.2015
(51) Int. Cl.: E21B 10/14, E21B 10/20, E21B 10/62

(54) **HYBRID BIT WITH MECHANICALLY ATTACHED ROLLING CUTTER ASSEMBLY**
HYBRIDER MEISSEL MIT MECHANISCH BEFESTIGTER SCHNEIDEWALZENANORDNUNG
TRÉPAN HYBRIDE AVEC ENSEMBLE DE FRAISE FIXÉ MÉCANIQUEMENT

(30) Priority: 23.05.2014 US 201462002787 P
(43) Date of publication of application: 29.03.2017
(60) Divisional application: 19161953.5
(73) Proprietor: Baker Hughes, a GE company, LLC, Houston, TX 77073 (US)
(72) Inventor: SCHRODER, Jon, The Woodlands, Texas 77382 (US)
(74) Representative: BRP Renaud & Partner mbB Rechtsanwälte Patentanwälte Steuerberater
(86) International application number: PCT/US2015/032230
(87) International publication number: WO 2015/179792

(56) References cited:
- WO-A1-2010/127382
- WO-A2-2009/135119
- US-A- 3 760 894
- US-A- 5 199 516
- US-A1- 2011 085 877

## Description

### BACKGROUND OF THE INVENTION

Field of the Invention. The inventions disclosed and taught herein relate generally to hybrid drill bits having at least one fixed blade with cutter elements and at least one rolling cutter assembly; and more specifically related to a hybrid drill bit having a mechanically fastened rolling cutter assembly.

### Description of the Related Art.

Rotary earth boring bits useful for oil and gas exploration and production have evolved considerably since the bi-cone bit developed by Howard Hughes, which had two rotatable cone-shaped cutting assemblies. Today, there are rotary bits with fixed or non-rotating blades with polycrystalline diamond cutters (PDC) mounted thereon. There are also hybrid bits combining fixed blade cutting elements and rotating cutting elements. Most, but not all hybrid bits are modular in construction, in that the rotatable or rolling cutter elements are separate components coupled to the bit body by welding or other type of fastening.

WO2009/135119 discloses an earth-boring drill bit having a combination of rolling and fixed cutters and cutting elements.

US 2011/085877 discloses a downhole tool including a cutter rotatably mounted to a journal, wherein the journal is fastened to a downhole tool frame with a fastener.

WO2010/127382 discloses a ground drilling or cutting tool comprising a cutting element removably attached thereto by attachment means.

US5,199,516 discloses a modular drill bit comprising a body for mounting a plurality of cone-carrying legs.

The inventions disclosed and taught herein are directed to an improved modular hybrid bit having at least one rolling cutter assembly mechanically fastened to the bit body.

### BRIEF SUMMARY OF THE INVENTION

According to a first aspect, the present invention provides a hybrid drill bit as claimed in claim 1.

The hybrid drill bit comprises a body having at least one blade, each blade comprising a plurality of earth formation cutting elements; at least one rolling cutter assembly pocket formed into the body and comprising a first torque-reacting structure, wherein the pocket is disposed between adjacent blades; at least one rolling cutter assembly comprising a head onto which a cutter element is rotatably coupled; the head comprising a second torque-reacting structure configured to operatively engage the first torque-reacting structure, and a plurality of mechanical fastener openings; a plurality of mechanical fasteners fabricated from high-strength, high fracture toughness, corrosion resistant metal alloy configured to securely and removably couple the at least one rolling cutter assembly to the pocket; a locking structure formed on a portion of at least one fastener and configured to provide an interference fit between the locking structure and an associated fastener opening in the head; a plurality of locking caps each configured to engage an exposed portion of a fastener and prevent relative rotation between the fastener and the cap; and a plurality of weldments engaging at least a portion of each locking cap and configured to prevent dislodgment of the caps from the fastener and to prevent relative rotation between the cap and the body.

According to a second aspect, the present invention provides a method of manufacturing a hybrid drill bit as claimed in claim 7.

### BRIEF DESCRIPTION OF THE SEVERAL VIEWS OF THE DRAWINGS

The following figures are included to further demonstrate and teach certain aspects of the present invention. The invention may be better understood by reference to one or more of these figures in combination with the detailed description of specific embodiments presented herein.
FIG. 1 illustrates in exploded view one of many possible embodiments of a modular hybrid drill bit with a rolling cutter assembly mechanically fastened to the bit body.
FIG. 2 illustrates the hybrid bit of FIG.1 in an assembled view
FIG. 3 illustrates one of many possible embodiments of a rolling cutter head.
FIG. 4 illustrates one of many possible embodiments of a mechanical fastener system and locking cap.
FIG. 5 illustrates a deformed fastener opening in a rolling cutter head.

### DETAILED DESCRIPTION

I have created a modular, hybrid drill bit comprising a single or a plurality of fixed blades and at least one rolling cutter assembly, in which the rolling cutter assembly is secured to the bit body with mechanical fasteners. The rolling cutter assembly may be configured to mate with a pocket in the bit body and to engage anti-rotation or anti-movement structures, such as a tongue and groove system. Further, shims may be used between the rolling cutter assembly and the pocket or bit body to adjust the radial projection of the rolling cutter assembly and/or the axial projection of the rolling cutter assembly.

In a preferred embodiment, the mechanical fasteners comprise threaded studs fabricated from high-strength, high-toughness, corrosion resistant metal alloy and extend radially outwardly from the pocket or bit body on to which the rolling cutter assembly is placed. Threaded nuts may engage the exposed stud threads and be tightened to clamp the rolling cutter assembly into the pocket. One or more of the studs may have a locking structure, such as an interference fit, that will elastically or plastically deform the fastener opening in the rolling cutter assembly to secure the assembly in axial position. The nuts may be weld in place to prevent loosening of the fasteners. Alternately and preferably, locking caps configured to engage the nut landings may be placed over the exposed nuts and welded together and to the bit body or alternately to a locking plate held down by the nuts eliminating welding to a head or bit body, to prevent loosening of the fasteners.

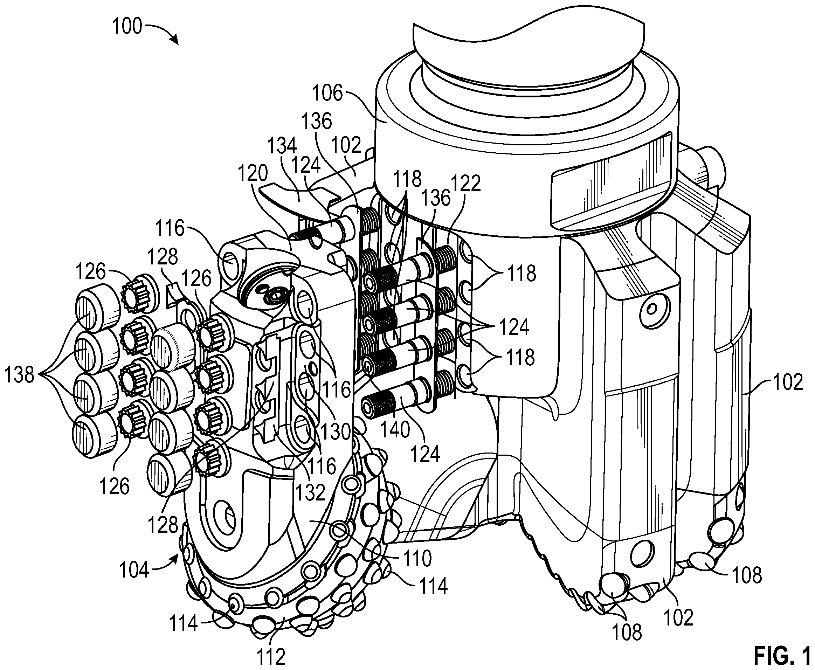

Turning now to FIG 1, illustrated is one of many possible embodiments of a hybrid drill bit 100 comprising a plurality of fixed cutter blades 102 and at least one rolling cutter assembly 104 mechanically and removably fastened to the bit body 106. As illustrated in FIG. 1 the fixed cutter blades 102 may be, but are not required to be, fabricated integrally with the drill bit body 106. The rolling cutter assembly 104 is illustrated as a separate component that is mechanically and removably attached to a portion of the drill bit body 106, preferably between fixed cutter blades102.

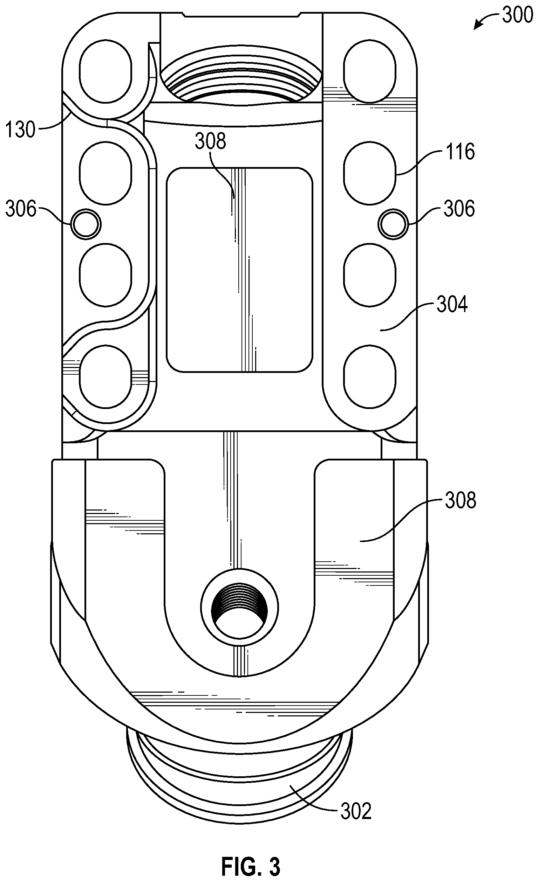

The fixed cutter blades 102 each have a plurality of cutting elements108, such as, without limitation, PDC cutting elements affixed thereto in known manner and location. The rolling cutter 104 comprises a body or head 110 having a spindle 302 (FIG. 3) and a rolling cone 112 to which a plurality of cutting elements 114 are affixed in known manner and location.

The rolling cutter head 110 has a plurality of mechanical fastener openings 116 substantially corresponding with fastener openings 118 in the bit body. The head 110 preferably, but not necessarily, comprises anti-movement element 120 or tongue that engages a mating portion 122 of the body such as a groove or head pocket in the bit body 106.

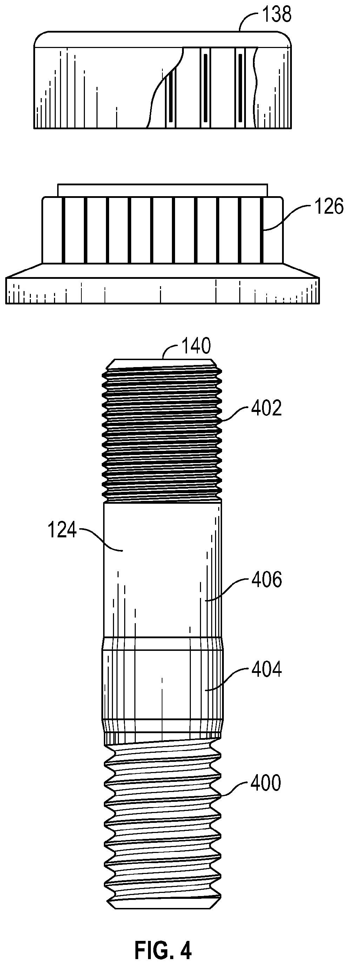

As illustrated in FIG. 1, the rolling cutter head 110 may be mechanically coupled to the body 106 through use of a plurality of threaded fasteners 124. In a preferred embodiment, the threaded fasteners 124 comprise threaded studs having threaded portions at each end. The rolling cutter head 110 will be secured to the bit body 106 with nuts 126 that matingly engage with the threaded studs. Alternately, threaded bolts having integral heads may be used. The preferred fasteners are discussed in more detail with respect to FIG. 4

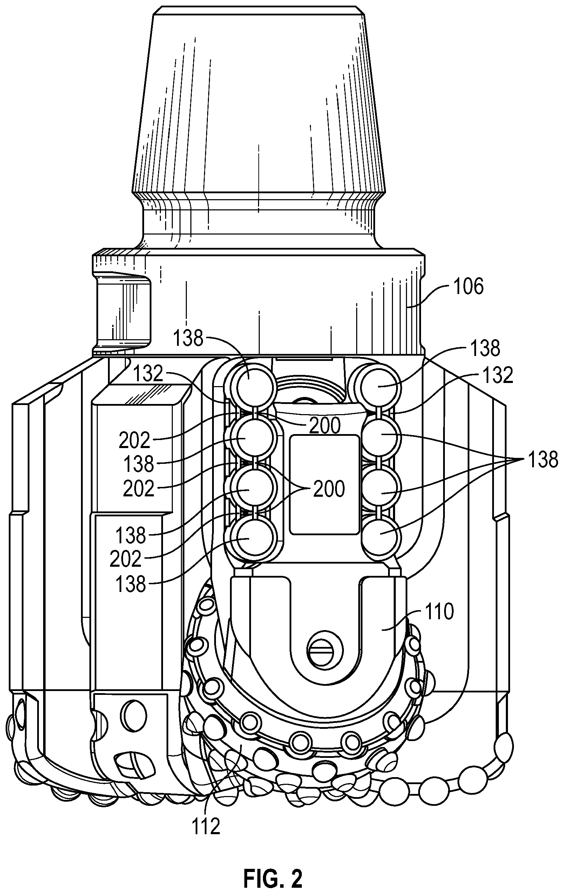

Also illustrated in FIG. 1 are optional locking plates 128. As illustrated, locking plate 128 engages a locking plate recess 130 in the head 110. The locking plate 128 illustrated in in FIG. 1 comprises three pillars 132, which, as illustrated in FIG. 2, are interposed between the nuts 126. As discussed with respect to FIG. 3, alternate locking plate configurations are contemplated.

The fastener openings in the head 116 and the corresponding openings in the bit body 118 may be, and preferably are, aligned along radial lines to a real or imaginary center of the body 106. Alternately, the fastener openings 116, 118 may be aligned along non-radial chords into the body.

It will be appreciated that at least because of the variations in component sizes caused by manufacturing tolerances in both the bit body 106 and in the rolling cutter head 110, hybrid bit 100 may utilize spacers or shims to adjust the precise location of the rolling cutter head 110 / rolling cutter cone 112 relative to the bit body 106, and most especially relative to the cutting element exposure. For example, as illustrated in FIG. 2, one or more shims 134 may be placed between a top surface of the rolling cutter head 110 and a corresponding part in the bit body 106, as shown. It will be appreciated that one or more shims 134 in this location will displace the rolling cutter head 110 in axial direction allowing adjustment of the exposure of the rolling cutting Elements 114. Similarly, one or more shims 136 may be placed between the rolling cutter head 110 and the bit body 106 to space the head 110 away from the body 106 in a radial direction. Because of this adjustability, it is preferred that the fastener openings 116, 118 be oriented along radial lines as well.

As discussed in more detail with respect to FIG. 3, axial adjustment of the rolling cutter assembly 104 requires that the fastener openings 116 be elongated a sufficient amount to allow for axial adjustment.

As illustrated in FIG. 2, the radial shims 136 may be held in place by the mechanical fasteners 124, 126. The axial shims 134, however, may be susceptible to movement or dislodging from their location between the rolling cutter head 110 and the bit body 106. It is contemplated that several different shim 134 locking mechanisms may be employed to hold the axial shims in place. For example, a recess may be formed in the cutting head 110 surface to engage a protrusion on the axial shim 134 to prevent the axial shim 134 from dislodging from the drill bit 100.

Lastly, as illustrated in FIG. 1, this particular embodiment 100 utilizes locking caps 138 to prevent the fastener nuts 126 from loosening, as will be discussed below.

Turning to FIG. 2, the bit 100 of FIG. 1 is shown in assembled conditioned. The mechanical fasteners 124, 126 have been tightened to the desired tension, and locking caps 138 have been installed on an exposed portion of the fasteners 116, such as a nut or a bolt head. To prevent the fasteners 116 from loosening during use of bit 100, a first series of tack welds 200 may be laid down along the top of the caps and between adjacent caps to join each adjacent cap. Additionally, a series of tack welds 202 may be laid down securing the caps 138 to, preferably, the locking plates 128, such as at each pillar 132, or, alternately, to the head 110. It will be appreciated that while welds 202 secure the caps to the bit 100 and prevent loosening of fastener 116, such as nuts 126, welds 200 are useful to keep the caps 138 aligned prior to placing weld 202.

While eight fasteners are shown in the embodiments described in FIGs. 1 and 2, it will be appreciated that other numbers of fasteners may be used, including one fastener per rolling cutter assembly. It will be appreciated that the number of fasteners may vary from one to multiple depending on the configuration of the rolling cutter element and its material properties, the material properties of the body, the material properties of the fastener(s) used. For the embodiments shown in FIGs. 1 and 2, only four fasteners are likely needed; specifically the two fasteners on either side at the top and bottom. The two middle fasteners on each side are considered back-up fasteners in case of failure of one or more of the primary fasteners. It will be appreciated that spacing the primary fasteners as described maximizes the anti-rotation properties of rolling cutter assembly.

FIG. 3 illustrates a rolling cutter head 300 suitable for use with the inventions disclosed herein. Head 300 is similar to the head 110 described in FIG. 1, and shows roller cone spindle 302 not visible in FIG. 1. Head 300 is shown with the recess 130 configured to receive locking plate 128, as shown in Fig. 1. Alternately, as shown in FIG. 3, the head 300 need not have a recess to utilize a locking plate, and the surface 304 may be substantially flat, for example. To aid in removal of the head 300 or cutter assembly 104 from the bit body 106 after use (such as for repair), head 300 is illustrated with removal aid 306, which may be threaded holes to receive a tool for pulling the head off of the body 106. Also illustrated in FIG. 3 are areas of hard-facing 308 that may be applied to the roller cutter head 300 preferably prior to assembly of the head 300 and prior to mating of the rolling cutter assembly on the bit body 106.

FIG. 3 also shows that the fastener holes 116 may be elongated circular holes rather than substantially circular holes. It will be appreciated that if axial adjustment of the rolling cutter assembly 104, 300 is desired, then fastener holes 116 may need to be elongated to allow for the axial movement of the assembly 104 relative to the body 106. Conversely, if no axial adjustment of the rolling cutter assembly 104 is desired, the fastener openings 116 may be circular or substantially circular and configured to mate with the mechanical fasteners with a sliding fit or location fit, as those terms are understood in the art. For example, if the desired amount of axial displacement or adjustment is about 1.78 mm (0.070 inch), then the long axis of the elongated opening will need to be equal to or greater than 1.78 mm (0.070 inch) more than the diameter of a corresponding circular hole.

Illustrated in FIG. 4 is an example of one of the many types of mechanical fastener systems that can be used with the present inventions. The presently preferred mechanical fastener system comprises a stud 124 having threaded portions 400 and 402 at each end and an associated nut 126. In the particular embodiment described in this disclosure, this fastener stud 124 may have a nominal diameter of 11.1 mm (7/16 inch) with an overall length of about 50.8 mm (2 inches). As illustrated in FIG. 4, threaded portion 400 comprises a course series thread, such as a 11.1 mm diameter, 14 threads per 25.4 mm (7/16 inch - 14) thread. The threaded portion 400 of the stud 124 is configured to mate with corresponding threads in threaded receptacles 118. The other end of the stud 124 may comprise a fine series
thread such as 11.1 mm diameter, 20 threads per 25.4 mm (7/16 inch - 20). One reason for having a fine series thread on one end of the stud 124 is because the material properties of the bit body 106 likely will be substantially less than the material properties of this preferred mechanical fastener system. Use of a fine thread 402 at the distal end of the stud to engage the nut 126 serves to reduce the possibility of overloading and stripping the course series threads 400 from the bit body.

It is preferred that the mechanical fasteners, for example the threaded studs 124 and nuts 126 be fabricated from a corrosion resistant, high-strength metal alloy material having a high level of material toughness. For example, it is presently preferred that the mechanical fasteners be fabricated from a Nickel-bearing, heat-treatable alloy, such as Inconel (RTM), having a tensile strength of at least 179 GPa (260,000 psi). Mechanical fasteners of this type may be obtained from various commercial sources, including, but not limited to Automotive Racing Products, Inc. Studs 124 and nuts 126 made by ARP from its Custom Age 625+ (RTM) material have been used for prototypes of hybrid bit 100. It is preferred, but not required, that the studs 124 and nuts126 be fabricated from the same material.

To the extent a locking plate 128 is used with a particular hybrid bit embodiment, the material for the locking plate and for the locking caps 138 need not be, and preferably are not, made from the same material as the fasteners. In a preferred embodiment, the locking plate 128 material and the locking cap 138 material may be a conventional steel alloy, such as AISI 8620, other metal alloy that provides ease of welding. Since the locking plate 128 and the locking cap are not significant loadbearing components, strength and load corrosion resistance is not as important as it is for the mechanical fasteners, which bear significant static and dynamic loads.

It will also be appreciated that the clamping force provided by the mechanical fasteners is an issue of design depending on the size of the bit 100, the environment anticipated and the materials from which the bit 100 are fabricated. For the embodiments illustrated in this application using eight 11.1 mm (7/16 inch) nominal mechanical fasteners for each rolling cutter assembly 104, it is desired to preload each fastener to about 145 MPa (21,000 pounds), or about 89% of its 0.02% offset yield load. Those of skill will appreciate it that determining the amount of fastener preload is typically done by controlling the amount of torque imposed on the nut 126. However, as is known, the relationship between torque and preload is not necessarily linear and is affected by a variety of factors, not the least of which is friction between the nut 126 and stud 124 threads. For example, it is been found that while 129 Nm (95 foot-pounds) of torque applied to the nut can be calculated to generate 7,940 kg (17,500 pounds) of preload, it has been found that up to about 163 Nm (120 foot-pounds) of torque was needed to achieve the same preload. This variation in calculated torque versus required torque was attributed to the friction between stud and the nut both being fabricated from the same high-strength, high- toughness material.

As illustrated in FIG. 1, the stud 126 may also comprise a recessed hex head 140 or other type of drive system for installing and tightening (e.g., torqueing) the stud into the bit body 106 at threaded receptacles 118.

Also shown in FIG. 4 is an upset region 404 approximately a 35.6 mm (1/4 inch) in length and having a diameter between about 0.432 mm and 0.483 mm (0.017 and 0.019 inch) greater than the main body 406 of the fastener 124. This upset area 404 is configured to provide an interference type fit with the fastener openings 116 in the rolling cutter head 110. It will be appreciated that once the appropriate axial shims 134 are put in place, if needed, and the rolling cutter assembly is put into position on the studs 124, tightening down the nuts 126 causes mechanical deformation, either plastic or elastic, thereby locking the rolling cutter assembly 104 head in axial position on the bit body 106. If the stud 124 material is stronger (e.g., harder) than the material from which the head 110 is made, the softer material will deform substantially more than the harder upset 404 region.

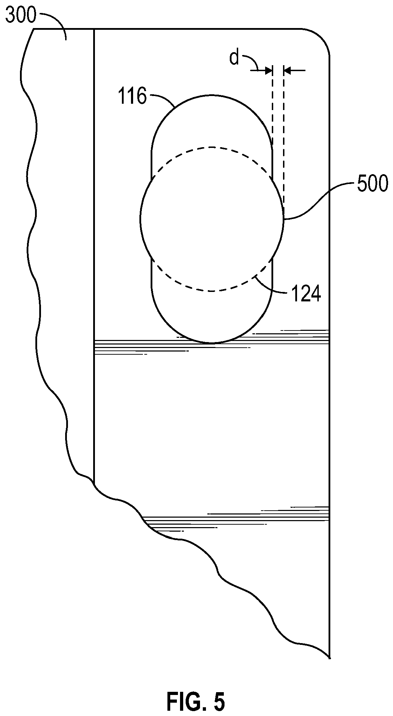

FIG. 5. is an illustration of what a fastener opening 116 may look like after plastic deformation 500 caused by the upset region 404 on stud 124. The deformation on one side of the opening 116 is labeled "d" in FIG. 5. It can be appreciated from this illustration this interference fit and resulting deformation functions to help secure the rolling cutter assembly 104 in axial position on the bit body 106.

It will be appreciated that there are alternate embodiments of this upset region that may be used to advantage with the inventions disclosed herein. For example, and without limitation, single or multiple protuberances such as diamond shaped points may be used instead of the circumferential upset 404 illustrated in FIG. 4. Alternately, serrated ridges along a portion of stud 124 may be used to help secure the rolling cutter assembly 104 in axial position.

Now having benefit of this disclosure, it will be appreciated that a hybrid bit according to the present invention may be assembled as follows. If studs are used as the mechanical fasteners, the studs are placed in the threaded receptacles in the bit body and torqued to the desired level such as, for example, 102 Nm (75 foot-pounds). It will be appreciated that the appropriate torque level will depend on the fastener material, the bit body material and the clamping force necessary to achieve the desired stability of the rolling cutter assembly.

Radial and axial shims, if needed or desired, may be placed in position on the bit body or the rolling cutter assembly, as desired. The rolling cutter head may be placed in the desired axial and radial position the bit body pocket so that the anti-rotation structures operatively engage each other. If studs are use, the rolling cutter assembly is slid down the studs. If bolts are used, the bolts are inserted into the fastener openings and screwed into the fastener receptacles in the bit body. If a fastener- locking plate is used, they are placed over the studs, or placed in position before the bolts are run home.

Nuts are screwed on the studs, if used, and each nut or bolt is torqued to the desired preload for each mechanical fastener. Once the fasteners are torqued to the appropriate level, locking caps may be placed over on the exposed position of each fastener, such as nut or bolt head. A weld, such as a tack weld, may be laid-down between the top cap surfaces. This weld may function to prevent the caps, and therefore the nuts or bolt heads from loosening by rotating. Also, this weld may be beneficial in preventing the caps from canting when a side cap weld is laid down. To prevent the caps from dislodging from the bit, a weld, such as a tack weld, may be placed between the sides of each cap and between the material that contacts the underside of the nut or bolt head. It will be appreciated that when a locking plate is used, and it is made from the same material as the locking cap, a side weld may be easily placed in these regions. If a lock plate is not used, the side weld can still lock the caps to each other and to the rolling cutter head.

If the mechanically fastened rolling cutter assembly needs to be removed, such as for repair of the bit, the one or more locking cap welds can be ground off and the locking caps removed. The fasteners can be loosened and removed. To ease dismantling of the rolling cutter assembly from the bit body, a pulling tool may engage one or more threaded receptacles in the rolling cutter assembly and used to pull the rolling cutter assembly past the interference fit caused by the upset portion of the mechanical fastener.

## Claims

1. A hybrid drill bit (100) comprising:
a body (106) having a plurality of blades (102), each blade comprising a plurality of earth formation cutting elements (108), the body (106) further comprising a plurality of mechanical fastener receptacles (118);
at least one rolling cutter assembly (104) pocket formed into the body (106) and comprising a first torque-reacting structure, wherein the pocket is disposed between adjacent blades (102);
at least one rolling cutter assembly (104) comprising a head (110) onto which a cutter element (114) is rotatably coupled;
the head (110) comprising a second torque-reacting structure configured to operatively engage the first torque reacting structure, and a plurality of mechanical fastener openings (116), wherein the plurality of mechanical fastener receptacles (118) of the body correspond with the plurality of mechanical fastener openings (116) of the head;
a plurality of mechanical fasteners (124) configured to securely and removably couple the at least one rolling cutter assembly (104) to the pocket;
the hybrid drill bit **characterised in that** it further comprises:
a locking structure (404) formed on a portion of at least one fastener (124) and configured to provide an interference fit between the locking structure (404) and an associated fastener opening (116) in the head (110);
a plurality of locking caps (138) each configured to engage an exposed portion of a fastener (124) and prevent relative rotation between the fastener and the cap (138); and a plurality of weldments (202) engaging at least a portion of each locking cap (138) and configured to prevent dislodgment of the caps (138) from the fastener (124) and to prevent relative rotation between the cap (138) and the body (106).

2. The hybrid bit of claim 1, wherein the first and second torque reacting structures comprise a tongue and groove configuration.

3. The hybrid bit of claim 1, wherein the fastener openings (116) are substantially round and configured for a location fit with a portion of the mechanical fastener (124).

4. The hybrid bit of claim 1, wherein a portion of at least one mechanical fastener (124) is configured for an interference fit with a fastener opening (116).

5. The hybrid bit of claim 4, wherein the interference fit causes deformation in the fastener opening (116).

6. The hybrid bit of claim 5, wherein the deformation in the fastener opening (116) secures the head (110) in an axial location.

7. A method for manufacturing a hybrid drill bit (100) comprising:
forming at least one rolling cutter assembly (104) pocket in a hybrid bit body (106) comprising a first torque-reacting structure;
providing at least one rolling cutter assembly (104) comprising a head (110) onto which a cutter element (108) is rotatably coupled;
providing a second torque-reacting structure on the rolling cutter assembly (104) configured to operatively engage the first torque reacting structure to resist relative movement between the rolling cutter assembly (104) and the bit body (106);
forming a plurality of mechanical fastener openings (116) in the rolling cutter assembly (104);
forming a plurality of mechanical fastener receptacles (118) in the bit body (106) corresponding to the plurality of mechanical fastener openings (116);
providing a plurality of mechanical fasteners (124) fabricated from high-strength, high fracture toughness, corrosion resistant metal alloy configured to securely and removably couple the rolling cutter assemblies (104) to the pockets;
the method **characterised in that** it further comprises:
providing a locking structure (404) on a portion of at least one fastener (124) and configured to provide an interference fit between the locking structure (404) and an associated fastener opening (116);
tightening the fasteners (124) against the rolling cutter assembly (104) to secure the rolling cutter assembly (104) to the bit body (106);
placing a locking cap (138) on an exposed portion of each fastener (124) to prevent relative rotation between the fastener (124) and the cap (138); and
welding at least a portion of each locking cap (138) to prevent dislodgment of the caps (138) from the fastener (124) and to prevent relative rotation between the cap (138) and the body (106).

8. The method of claim 7, wherein the first and second torque reacting structures comprise a tongue and groove configuration.

9. The method of claim 7, wherein the fastener openings (116) are substantially round and configured for a location fit with a portion of the mechanical fastener (124).

10. The method of claim 7, wherein a portion of at least one mechanical fastener (124) is configured for interference fit with a fastener opening (116).

11. The method of claim 10, wherein the interference fit causes deformation of the fastener opening (116).

12. The method of claim 11, wherein the deformation in the fastener opening (116) secures the head (110) in an axial location.

13. The method of claim 10, wherein the deformation is elastic deformation.

14. The method of claim 10, wherein the deformation is plastic deformation.

15. The method of claim 11, wherein the deformation in the fastener opening (116) secures the head (110) in an axial location.

## Patentansprüche

1. Hybridbohrmeißel (100), umfassend:
einen Körper (106) mit einer Vielzahl von Blättern (102), wobei jedes Blatt eine Vielzahl von Erdformationsschneidelementen (108) umfasst, wobei der Körper (106) ferner eine Vielzahl von mechanischen Befestigungsaufnahmen (118) umfasst;
mindestens eine in den Körper (106) geformte Vertiefung der Rollenschneidanordnung (104) und mit einer ersten Drehmomentreaktionsstruktur, wobei die Vertiefung zwischen angrenzenden Blättern (102) angeordnet ist;
mindestens eine Rollenschneidanordnung (104) mit einem Kopf (110), an den ein Schneidelement (114) drehbar gekoppelt ist;
wobei der Kopf (110) eine zweite Drehmomentreaktionsstruktur umfasst, die konfiguriert ist, um funktionsfähig in die erste Drehmomentreaktionsstruktur einzugreifen, und eine Vielzahl von mechanischen Befestigungsöffnungen (116), wobei die Vielzahl von mechanischen Befestigungsaufnahmen (118) des Körpers mit der Vielzahl von mechanischen Befestigungsöffnungen (116) des Kopfes übereinstimmt;
eine Vielzahl von mechanischen Befestigungselementen (124), die konfiguriert sind, um die mindestens eine Rollenschneidanordnung (104) sicher und entfernbar mit der Vertiefung zu koppeln;
wobei der Hybridbohrmeißel **dadurch gekennzeichnet ist, dass** er ferner Folgendes umfasst:
eine Verriegelungsstruktur (404), die auf einem Abschnitt mindestens eines Befestigungselements (124) ausgebildet und konfiguriert ist, um einen Presssitz zwischen der Verriegelungsstruktur (404) und einer zugehörigen Befestigungsöffnung (116) im Kopf (110) bereitzustellen;
eine Vielzahl von Verriegelungskappen (138), die jeweils konfiguriert sind, um in einen freiliegenden Abschnitt eines Befestigungselements (124) einzugreifen und eine relative Drehung zwischen dem Befestigungselement und der Kappe (138) zu verhindern; und eine Vielzahl von Schweißungen (202), die in mindestens einen Abschnitt jeder Verriegelungskappe (138) eingreifen und konfiguriert sind, um ein Lösen der Kappen (138) vom Befestigungselement (124) zu verhindern und eine relative Drehung zwischen der Kappe (138) und dem Körper (106) zu verhindern.

2. Hybridmeißel nach Anspruch 1, wobei die ersten und zweiten Drehmomentreaktionsstrukturen eine Nut- und Feder-Konfiguration umfasst.

3. Hybridmeißel nach Anspruch 1, wobei die Befestigungsöffnungen (116) im Wesentlichen rund und für eine Positionspassung mit einem Abschnitt des mechanischen Befestigungselements (124) konfiguriert sind.

4. Hybridmeißel nach Anspruch 1, wobei ein Abschnitt mindestens eines mechanischen Befestigungselements (124) für einen Presssitz mit einer Befestigungsöffnung (116) konfiguriert ist.

5. Hybridmeißel nach Anspruch 4,
wobei der Presssitz eine Verformung in der Befestigungsöffnung (116) bewirkt.

6. Hybridmeißel nach Anspruch 5,
wobei die Verformung in der Befestigungsöffnung (116) den Kopf (110) an einer axialen Position sichert.

7. Verfahren zur Herstellung eines Hybridbohrmeißels (100), umfassend:
Formen mindestens einer Vertiefung für eine Rollenschneidanordnung (104) in einem Hybridmeißelkörper (106), der eine erste Drehmomentreaktionsstruktur umfasst;
Bereitstellen mindestens einer Rollenschneidanordnung (104) mit einem Kopf (110), auf dem ein Schneidelement (108) drehbar gekoppelt ist;
Bereitstellen einer zweiten Drehmomentreaktionsstruktur auf der Rollenschneidanordnung (104), die konfiguriert ist, um funktionsfähig in die erste Drehmomentreaktionsstruktur einzugreifen, um einer Relativbewegung zwischen der Rollenschneidanordnung (104) und dem Meißelkörper (106) zu widerstehen.;
Bilden einer Vielzahl von mechanischen Befestigungsöffnungen (116) in der Rollenschneidanordnung (104);
Bilden einer Vielzahl von mechanischen Befestigungsaufnahmen (118) in dem Meißelkörper (106), die der Vielzahl von mechanischen Befestigungsöffnungen (116) entsprechen;
Bereitstellen einer Vielzahl von mechanischen Befestigungselementen (124), die aus einer hochfesten, bruchfesten, korrosionsbeständigen Metalllegierung hergestellt sind, die konfiguriert ist, um die Rollenschneidanordnungen (104) sicher und entfernbar mit den Vertiefungen zu koppeln;
wobei das Verfahren **dadurch gekennzeichnet ist, dass** es ferner Folgendes umfasst:
Bereitstellen einer Verriegelungsstruktur (404) auf einem Abschnitt mindestens eines Befestigungselements (124) und konfiguriert, um einen Presssitz zwischen der Verriegelungsstruktur (404) und einer zugehörigen Befestigungsöffnung (116) bereitzustellen;
Festziehen der Befestigungselemente (124) gegen die Rollenschneidanordnung (104), um die Rollenschneidanordnung (104) am Meißelkörper (106) zu befestigen;
Platzieren einer Verriegelungskappe (138) auf einem freiliegenden Abschnitt jedes Befestigungselements (124), um eine relative Drehung zwischen dem Befestigungselement (124) und der Kappe (138) zu verhindern; und
Verschweißen mindestens eines Abschnitts jeder Verriegelungskappe (138), um ein Lösen der Kappen (138) vom Befestigungselement (124) zu verhindern und eine relative Drehung zwischen der Kappe (138) und dem Körper (106) zu verhindern.

8. Verfahren nach Anspruch 7, wobei die ersten und zweiten Drehmomentreaktionsstrukturen eine Nut- und Feder-Konfiguration umfasst.

9. Verfahren nach Anspruch 7, wobei die Befestigungsöffnungen (116) im Wesentlichen rund und für eine Positionspassung mit einem Abschnitt des mechanischen Befestigungselements (124) konfiguriert sind.

10. Verfahren nach Anspruch 7, wobei ein Abschnitt mindestens eines mechanischen Befestigungselements (124) für einen Presssitz mit einer Befestigungsöffnung (116) konfiguriert ist.

11. Verfahren nach Anspruch 10, wobei der Presssitz eine Verformung in der Befestigungsöffnung (116) bewirkt.

12. Verfahren nach Anspruch 11, wobei die Verformung in der Befestigungsöffnung (116) den Kopf (110) in einer axialen Position sichert.

13. Verfahren nach Anspruch 10, wobei die Verformung eine elastische Verformung ist.

14. Verfahren nach Anspruch 10, wobei die Verformung eine plastische Verformung ist.

15. Verfahren nach Anspruch 11, wobei die Verformung in der Befestigungsöffnung (116) den Kopf (110) in einer axialen Position sichert.

## Revendications

1. Trépan hybride (100) comprenant :
un corps (106) ayant une pluralité de lames (102), chaque lame comprenant une pluralité d'éléments de coupe de formation terrestre (108), le corps (106) comprenant en outre une pluralité de réceptacles de fixation mécanique (118) ;
au moins une poche pour un ensemble de coupe à molettes (104) formée dans le corps (106) et comprenant une première structure réagissant à un couple, dans lequel la poche est disposée entre des lames adjacentes (102) ;
au moins un ensemble de coupe à molettes (104) comprenant une tête (110) sur laquelle un élément de coupe (114) est couplé de manière rotative ;
la tête (110) comprenant une deuxième structure réagissant à un couple configurée pour venir en prise opérationnellement avec la première structure réagissant à un couple, et une pluralité d'ouvertures de fixation mécanique (116), dans lequel la pluralité de réceptacles de fixation mécanique (118) du corps correspond à la pluralité d'ouvertures de fixation mécanique (116) de la tête ;
une pluralité de fixations mécaniques (124) configurées pour coupler solidement et de façon amovible l'au moins un ensemble de coupe à molettes (104) à la poche ;
le trépan hybride **caractérisé en ce qu'**il comprend en outre :
une structure de verrouillage (404) formée sur une partie d'au moins une fixation (124) et configurée pour fournir un ajustement serré entre la structure de verrouillage (404) et une ouverture de fixation associée (116) dans la tête (110) ;
une pluralité de coiffes de verrouillage (138) configurées chacune pour venir en prise avec une partie exposée d'une fixation (124) et empêcher une rotation relative entre la fixation et la coiffe (138) ; et une pluralité d'ensembles soudés (202) venant en prise avec au moins une partie de chaque coiffe de verrouillage (138) et configurés pour empêcher un détachement des coiffes (138) de la fixation (124) et pour empêcher une rotation relative entre la coiffe (138) et le corps (106).

2. Trépan hybride selon la revendication 1, dans lequel les première et deuxième structures réagissant à un couple comprennent une configuration à rainure et languette.

3. Trépan hybride selon la revendication 1, dans lequel les ouvertures de fixation (116) sont essentiellement rondes et configurées pour un ajustement localisé avec une partie de la fixation mécanique (124).

4. Trépan hybride selon la revendication 1, dans lequel une partie d'au moins une fixation mécanique (124) est configurée pour un ajustement serré avec une ouverture de fixation (116).

5. Trépan hybride selon la revendication 4,
dans lequel l'ajustement serré provoque une déformation dans l'ouverture de fixation (116).

6. Trépan hybride selon la revendication 5,
dans lequel la déformation dans l'ouverture de fixation (116) fixe la tête (110) dans un emplacement axial.

7. Procédé de fabrication d'un trépan hybride (100) comprenant :
la formation d'au moins une poche pour un ensemble de coupe à molettes (104) dans un corps de trépan hybride (106) comprenant une première structure réagissant à un couple ;
la fourniture d'au moins un ensemble de coupe à molettes (104) comprenant une tête (110) sur laquelle un élément de coupe (108) est couplé de manière rotative ;
la fourniture d'une deuxième structure réagissant à un couple sur l'ensemble de coupe à molettes (104) configurée pour venir en prise opérationnellement avec la première structure réagissant à un couple pour résister à un mouvement relatif entre l'ensemble de coupe à molettes (104) et le corps de trépan (106) ;
la formation d'une pluralité d'ouvertures de fixation mécanique (116) dans l'ensemble de coupe à molettes (104) ;
la formation d'une pluralité de réceptacles de fixation mécanique (118) dans le corps de trépan (106) correspondant à la pluralité d'ouvertures de fixation mécanique (116) ;
la fourniture d'une pluralité de fixations mécaniques (124), fabriquées à partir d'un alliage métallique à haute résistance, à haute ténacité à la fracture, résistant à la corrosion, configurées pour coupler solidement et de façon amovible les ensembles de coupe à molettes (104) aux poches ;
le procédé **caractérisé en ce qu'**il comprend en outre :
la fourniture d'une structure de verrouillage (404) sur une partie d'au moins une fixation (124) et configurée pour fournir un ajustement serré entre la structure de verrouillage (404) et une ouverture de fixation associée (116) ;
le serrage des fixations (124) contre l'ensemble de coupe à molettes (104) pour fixer l'ensemble de coupe à molettes (104) au corps de trépan (106) ;
la mise en place d'une coiffe de verrouillage (138) sur une partie exposée de chaque fixation (124) pour empêcher une rotation relative entre la fixation (124) et la coiffe (138) ; et
le soudage d'au moins une partie de chaque coiffe de verrouillage (138) pour empêcher un détachement des coiffes (138) de la fixation (124) et pour empêcher une rotation relative entre la coiffe (138) et le corps (106).

8. Procédé selon la revendication 7, dans lequel les première et deuxième structures réagissant à un couple comprennent une configuration à rainure et languette.

9. Procédé selon la revendication 7, dans lequel les ouvertures de fixation (116) sont essentiellement rondes et configurées pour un ajustement localisé avec une partie de la fixation mécanique (124).

10. Procédé selon la revendication 7, dans lequel une partie d'au moins une fixation mécanique (124) est configurée pour un ajustement serré avec une ouverture de fixation (116).

11. Procédé selon la revendication 10, dans lequel l'ajustement serré provoque une déformation de l'ouverture de fixation (116).

12. Procédé selon la revendication 11, dans lequel la déformation dans l'ouverture de fixation (116) fixe la tête (110) dans un emplacement axial.

13. Procédé selon la revendication 10, dans lequel la déformation est une déformation élastique.

14. Procédé selon la revendication 10, dans lequel la déformation est une déformation plastique.

15. Procédé selon la revendication 11, dans lequel la déformation dans l'ouverture de fixation (116) fixe la tête (110) dans un emplacement axial.
